# EUROPEAN PATENT APPLICATION

(11) **EP 4 790 088 A1**
(43) Date of publication of application: **12.08.2026**
(21) Application number: 26157724.1
(22) Date of filing: 11.02.2026
(51) Int. Cl.: C08K 5/12, C08K 5/3492, C08K 5/5425, C08K 5/5455, C09J 175/04, E01C 13/08, C08K 3/26

(54) **ARTIFICIAL GRASS GLUE**

(30) Priority: 11.02.2025 BE 202505077
(71) Applicant: DL Chemicals Detaellenaere-Loosvelt N.V., 8793 Waregem (BE)
(72) Inventor: FOURNEAU, Bart, 8793 Waregem (BE)
(74) Representative: Brantsandpatents bv

(57) **Abstract**

The present invention relates to an adhesive composition for use in bonding artificial grass to a substrate. The composition is obtained by mixing at least one or more aliphatic prepolymers in a concentration of 10-30 wt%, one or more stabilizers in a concentration of 0.1-2 wt% and one or more chalk fillers in a concentration of 50-80 wt%. The composition is a one-component adhesive, wherein the one or more aliphatic prepolymers and the one or more stabilizers comprise a ratio of between 30:1 and 40:1. Furthermore, the one or more aliphatic prepolymers and the one or more chalk fillers comprise a ratio of between 1:3 and 1:4.

## Description

### TECHNICAL FIELD

The invention relates to an adhesive composition, more specifically a composition for bonding grass.

### PRIOR ART

The prior art with respect to artificial grass adhesives focuses on compositions that have been specially developed to secure artificial grass firmly and durably to a substrate or to repair seams between artificial grass strips. Such adhesives are characterized by properties such as strong adhesion, water resistance, and flexibility to accommodate expansion and contraction of both the artificial grass and the substrate. Artificial grass adhesives are applied in diverse environments, including sports fields, gardens, roof terraces, and even interior cladding, and are intended to withstand prolonged loading and exposure to varying climatic conditions.

A point of concern in the current prior art is the ability of artificial grass adhesives to perform consistently in different weather conditions. Many of the available adhesives provide insufficient adhesion on wet or slightly moist substrates, leading to reduced durability of the installation. This problem is particularly relevant in regions with a temperate or humid climate, where rainfall and high relative humidity are common. Furthermore, the curing speed of existing adhesives can be problematic: excessively rapid curing hinders correct application, while excessively slow curing considerably extends the time to commissioning of the artificial grass field.

Another problem in the current art concerns the long-term stability of artificial grass adhesives under the influence of UV radiation, temperature fluctuations, and mechanical loading. Over time, this can lead to degradation of the adhesive, resulting in detached seams or reduced adhesion to the substrate. The chemical composition of certain adhesives also raises concerns, in particular regarding emissions of volatile organic compounds (VOCs) and the environmental impact. Existing adhesives may furthermore fall short in flexibility, which is essential to prevent cracks or fractures in the adhesive layer upon movements of the artificial grass or the substrate.

The present invention aims to provide a solution to at least some of the above-mentioned problems.

### SUMMARY OF THE INVENTION

In a first aspect, the invention relates to an artificial grass adhesive according to claim 1. Further preferred embodiments are set out in claims 2 to 16. The invention offers advantages such as improved adhesion on both dry and slightly moist substrates, which facilitates application in diverse climatic conditions. The composition combines flexibility and durability, rendering it resistant to mechanical loading and prolonged exposure to UV radiation and weather effects. In addition, the specific formulation provides for a low emission of volatile organic compounds, which increases environmental friendliness and safety. Ease of use is further supported by compatibility with various tools, enabling both professionals and do-it-yourselfers to install or repair artificial grass efficiently and reliably.

In a second aspect, the invention relates to a use of the composition according to claims 17 to 19. Finally, in a third aspect, the invention relates to a kit according to claim 20.

### DETAILED DESCRIPTION

In a first aspect, the invention relates to an adhesive composition for use in bonding artificial grass to a substrate. The composition is obtained by mixing at least one or more aliphatic prepolymers in a concentration of 10-30 wt%, one or more stabilizers in a concentration of 0.1-2 wt% and one or more chalk fillers in a concentration of 50-80 wt%. The composition is a one-component adhesive, wherein the one or more aliphatic prepolymers and the one or more stabilizers comprise a ratio of between 30: 1 and 40: 1. Furthermore, the one or more aliphatic prepolymers and the one or more chalk fillers comprise a ratio of between 1:3 and 1:4.

Artificial grass adhesive is a component in the installation of artificial grass systems and plays an important role in ensuring a durable bond between the grass mats and the substrate. These adhesives are designed to function under diverse conditions, wherein both mechanical and chemical properties contribute to a strong and long-lasting bond. The choice of the correct adhesive depends on various factors, including the nature of the substrate, the exposure to weather influences and the specific requirements of the intended use.

Artificial grass adhesives must be resistant to environmental factors such as rain, temperature differences and mechanical loading due to intensive use. This requires a composition that not only provides flexibility and strength, but also stability over a longer period, even under challenging conditions. By combining these properties, an artificial grass adhesive can improve the reliability and service life of the entire system. The present invention is directed at providing a solution for existing limitations, enabling a broader field of application and better performance under real-world conditions. In one embodiment, the artificial grass adhesive is eminently suitable for a Northwest European climate, which is characterized by fluctuating temperatures, frequent rainfall and high relative humidity throughout the year.

In one embodiment, the composition comprises aliphatic prepolymers; a specific class of synthetic compounds that play a role in the formulation of high-quality adhesives, including artificial grass adhesive. Prepolymers are reactive intermediates that form partially cured polymers and can be converted into fully cured polymers by means of chemical reactions. In the case of aliphatic prepolymers, the base structures are built up from aliphatic chains, which means that the molecules consist predominantly of straight or branched carbon chains without aromatic rings. This structure results in properties such as excellent flexibility, UV resistance and a high degree of chemical stability.

Within this class, aliphatic polyurethanes and polyesters in particular belong to the most commonly used compounds, such as an aliphatic silane-terminated polyurethane. Aliphatic polyurethanes are obtained by reacting aliphatic isocyanates, such as hexamethylene diisocyanate (HDI) or isophorone diisocyanate (IPDI), with polyols. These compounds are characterized by their flexibility and their resistance to yellowing upon exposure to sunlight, which is a crucial property in applications such as artificial grass adhesive. Aliphatic polyesters, by contrast, are synthesized from aliphatic diols and aliphatic dicarboxylic acids and offer excellent elasticity and chemical resistance. In a preferred embodiment, the composition comprises an aliphatic silane-terminated polyurethane.

In artificial grass adhesives, aliphatic prepolymers serve as the basis for the bonding reaction. When the adhesive is applied, the prepolymers react with moisture in the air or in the substrate, resulting in the formation of a fully cured polymer. This curing process, also referred to as polyaddition, takes place via the reactive isocyanate groups in the prepolymers, which form a bond with water molecules, thereby forming carbamates (urethane bonds). This chemical transformation ensures the development of a durable and elastic bond that is resistant to mechanical stress and environmental influences.

The use of aliphatic prepolymers in artificial grass adhesives offers specific advantages, including long-term UV stability, which is essential for outdoor applications, and high resistance to moisture, which contributes to the suitability of these adhesives for both dry and slightly moist substrates. Furthermore, the flexibility and strength of the resulting polymers ensure that the artificial grass system is resistant to temperature fluctuations and mechanical stress, which promotes the longevity and functionality of the system as a whole.

In one embodiment, the one or more aliphatic prepolymers are selected from the group of, but not limited to, hexamethylene diisocyanate (HDI), isophorone diisocyanate (IPDI), 1,6-hexanediol, trimethylolpropane (TMP), 1,4-butanediol, polyether diols, polypropylene glycol (PPG), polybutylene glycol (PBG), aliphatic diols, polycarboxylic acid ester, aliphatic polyesters, polycaprolactone, pentaerythritol, neopentyl glycol, 1,3-propylene glycol, adipic acid, sebacic acid, dodecanedioic acid, azelaic acid, terephthalic acid, polyurethane prepolymers based on aliphatic isocyanates, A-174 (3-aminopropyltriethoxysilane), A-1100 (aminosilane), MPS (Methacryloxypropyltrimethoxysilane), GLYMO (Glycidoxypropyltrimethoxysilane), KH-560 (3-mercaptopropyltrimethoxysilane), A-172 (Vinyltriethoxysilane), GPTMS (Glycidoxypropyltrimethoxysilane), DOWSIL Z-6020 (Trimethoxyvinylsilane), Si-69 (Vinyltris(2-methoxyethoxy)silane), 3-aminopropyltriethoxysilane (APS).

In a preferred embodiment, the one or more aliphatic prepolymers comprise at least one silane group. Aliphatic prepolymers comprising a silane group offer specific advantages for artificial grass adhesives, as the silane group improves the adhesion to various substrates. Silane groups, such as alkoxysilanes (for example trimethoxysilane or silanol), can strengthen the bond between the adhesive and the substrate. This results in improved durability and resistance to environmental factors. The presence of a silane group also contributes to the water resistance of the adhesive and improves adhesion when the substrate is slightly moist. In one embodiment, the prepolymers are selected from the group of, but not limited to, A-174 (3-aminopropyltriethoxysilane), aminosilane diaminotrimethoxysilane, A-1100 (aminosilane), MPS (Methacryloxypropyltrimethoxysilane), GLYMO (Glycidoxypropyltrimethoxysilane), KH-560 (3-mercaptopropyltrimethoxysilane), A-172 (Vinyltriethoxysilane), GPTMS (Glycidoxypropyltrimethoxysilane), DOWSIL Z-6020 (Trimethoxyvinylsilane), Si-69 (Vinyltris(2-methoxyethoxy)silane), 3-aminopropyltriethoxysilane (APS). Preferably, the composition comprises aminosilane diaminotrimethoxysilane.

In a further embodiment, the one or more aliphatic prepolymers have a viscosity of between 10,000 and 100,000 mPa·s, measured in accordance with ISO 3219. According to one embodiment, the one or more aliphatic prepolymers are present in a concentration of between 0 wt% and 50 wt%, more preferably between 10 wt% and 40 wt%, even more preferably between 10 wt% and 30 wt%.

In one embodiment, the composition comprises stabilizers. Stabilizers that play a role in artificial grass adhesive, in particular for outdoor use in a Northwest European climate, promote the performance of the adhesive under varying weather conditions. In this climate, characterized by frequent rainfall, temperature fluctuations, and a relatively high relative humidity, stabilizers must help the adhesive to withstand the influence of these environmental factors. UV stabilizers are an important category for artificial grass adhesives that are used outdoors. These stabilizers protect the adhesive against degradation by sunlight, which can otherwise lead to discoloration, hardening, or loss of adhesion. UV absorbers or hindered amine light stabilizers (HALS), such as benzotriazoles, help to protect the chemical compounds in the adhesive against the harmful effects of UV radiation.

Oxidation stabilizers, such as hindered amine light stabilizers (HALS), influence the stability of the adhesive. HALS can prevent the degradation of polymers by blocking oxygen reactions, which extends the service life of the adhesive, particularly upon exposure to moisture and air. These stabilizers are important in a climate with a high level of rainfall, where moisture can affect the adhesive.

In addition, the stabilizers that protect the chemical properties of the adhesive against moisture infiltration can also be important. Hydrophobic additives, such as silanes or silicones, improve the water resistance of the adhesive. These stabilizers prevent water from penetrating into the adhesive and degrading the adhesion or the structure of the adhesive.

Finally, antioxidants, such as butylhydroxytoluene (BHT), can be added to slow the aging of the adhesive through interaction with air or UV light, whereby the adhesive retains its performance for longer, even under the stress of weather changes and use in an outdoor environment.

In one embodiment, the stabilizers are selected from the group of, but not limited to benzotriazoles (such as 2-(2H-benzotriazol-2-yl)-4,6-di-tert-butylphenol), Hindered Amine Light Stabilizers (HALS), benzophenones (such as 2-hydroxy-4-methoxybenzophenone), UV-absorbing acrylates (e.g. 2,4-dihydroxybenzophenone), triazines (such as 2,4-dihydroxybenzotriazine), phenyltriazines, octocrylene, ethylhexyl methoxycinnamate, 2,2,4-trimethylpentanediol monoisobutyrate, cyanoacrylate UV absorbers, methacrylate UV absorbers, silica-based UV stabilizers. Preferably, the one or more stabilizers comprise at least triazines. Furthermore, the one or more stabilizers are present in a concentration of 0.1 wt% to 5 wt%, more preferably of 0.1 wt% to 3 wt%, even more preferably of 0.1 wt% to 2 wt%. In one embodiment, the aliphatic prepolymers and the stabilizers are present in a ratio of between 30:1 and 40:1.

In a further embodiment, the composition comprises chalk. As a filler, chalk is added to reduce costs, increase the volume of the adhesive, and improve the viscosity, which facilitates application. By virtue of its fine, powder-like structure, chalk helps to bring about a homogeneous distribution of other components in the adhesive, which ensures a consistent performance across the entire surface.

In addition to its role as a filler, chalk also contributes to the water-tightness of the adhesive. It can act as a barrier against water infiltration through the build-up of a dense layer in the final adhesive film. This prevents water from penetrating into the adhesive, which is essential for applications exposed to outdoor conditions, such as artificial grass installations. Chalk can also help improve adhesion to moist substrates by increasing the surface tension of the adhesive.

The addition of chalk therefore not only provides cost advantages and structural advantages, but also plays a role in improving the water resistance of the adhesive, which is of importance for long-term performance in a moist, variable outdoor environment.

In one embodiment, the chalk comprises various types of powders, such as green powder, black powder, yellow powder and/or coated calcium carbonate. Coated calcium carbonate is frequently used as a filler in adhesives, such as artificial grass adhesive, on account of the advantages offered by the coating. The coating, selected from, but not limited to, silanes and stearates, improves the dispersion of the calcium carbonate in the adhesive, thereby improving the processing properties and viscosity. It also provides better adhesion between the calcium carbonate and the adhesive matrix, which increases the mechanical strength and stability of the adhesive. Furthermore, the coating helps to improve water-tightness by preventing moisture from penetrating the calcium carbonate, which increases the water resistance of the adhesive, which is important for outdoor applications. In a preferred embodiment, the chalk comprises chromium oxide and/or iron oxides.

In addition, the coating contributes to the thermal and chemical stability of the adhesive, making the adhesive more resistant to temperature fluctuations and UV radiation. This makes coated calcium carbonate a valuable addition to adhesives used outdoors, such as in a Northwest European climate. In one embodiment, the chalk is present at a concentration between 50 wt% and 100 wt%, more preferably between 50 wt% and 90 wt%, even more preferably between 50 wt% and 80 wt%. In one embodiment, the aliphatic prepolymers and the chalk are present in a ratio between 1:3 and 1:4.

In a further embodiment, the composition comprises one or more plasticizers, preferably at least one organic plasticizer. Plasticizers are substances that are added to the adhesive to improve the flexibility, processability, and adhesion properties. They reduce the viscosity of the adhesive, which facilitates application, and increase the flexibility of the final adhesive film. This is particularly important in applications such as artificial grass adhesives, where the adhesive must be resistant to temperature fluctuations, movement, and other mechanical loads.

Organic plasticizers play a role in improving the viscoelastic properties of the adhesive. By increasing the flexibility of the adhesive, they ensure that the adhesive is more resistant to cracking, tearing, or other forms of damage that may occur under movement or stress. In outdoor environments, such as the use of artificial grass adhesives in a Northwest European climate, plasticizers can also help to make the adhesive more resistant to the effects of UV radiation and moisture. This renders the adhesive more durable, even when it is exposed to adverse weather conditions such as rain, sun, and temperature fluctuations.

The use of organic plasticizers in combination with other plasticizers or stabilizers can also help to improve the long-term performance of the adhesive. They contribute to aging resistance by minimizing the influence of environmental factors such as humidity, oxygen, and UV light. This is of importance for artificial grass adhesives, which come into prolonged contact with the environment and are subject to the daily loading of use and changing weather conditions. Plasticizers can furthermore improve adhesion to various substrates by optimizing the interfacial interactions, which ensures a strong and durable bond between the artificial grass and the substrate material.

In one embodiment, the organic plasticizers are selected from the group of, but not limited to, phthalates, dioctyl phthalate (DOP), diisononyl phthalate (DINP), di(2-ethylhexyl) phthalate (DEHP), di-n-butyl phthalate (DBP), dioctyl sebacate, diisodecyl phthalate (DIDP), adipates, diisononyl adipate (DINA), dibutyl adipate (DBA), sebacates, di(2-ethylhexyl) sebacate (DEHS), butylbenzene, phosphates, triphenyl phosphate (TPP), triphenylphosphine oxide (TPPO), dioctyl phosphate (DOFP), tributyl phosphate (TBP), epoxidized soybean oil, glyceryl tributyrate, butyl glycolate, alkylbenzene, phthalate-free plasticizers (e.g. citrate esters), camphor, terephthalic acid esters, polypropylene glycol and/or aliphatic alcohols (such as 2-ethylhexanol). In a preferred embodiment, the composition comprises organic plasticizers comprising at least one phthalate, selected from the group of, but not limited to, dioctyl phthalate (DOP), diisononyl phthalate (DINP), di(2-ethylhexyl)phthalate (DEHP), di-n-butyl phthalate (DBP), diisodecyl phthalate (DIDP), di(2-ethylhexyl)phthalate (DEHP), bis(2-ethylhexyl)phthalate (BEHP), dimethyl phthalate (DMP), dibutyl phthalate (DBP), di(iso-octyl)phthalate (DIOP), din-octyl phthalate (DnOP), butylbenzyl phthalate (BBP), diisoheptyl phthalate (DIHP), preferably diisodecyl phthalate.

In a further embodiment, the composition comprises one or more crosslinkers. In an adhesive composition, crosslinkers facilitate the curing process, wherein the material transitions from a liquid or pasty form into a solid, elastic structure. Crosslinkers react with moisture from the air or other reactive components in the composition, which leads to crosslinking between the polymer chains. This crosslinking process creates a stable and flexible network which is resistant to temperature fluctuations, moisture, and other environmental factors.

In one embodiment, the composition comprises crosslinkers having an alkoxy group. This group comprises a reactive alkyl group that can interact with moisture in the air and thereby cures the composition. Preferably, the crosslinker is an alkoxysilane. These crosslinkers have a molecular weight between 100 g/mol and 250 g/mol. The molecular weight can be theoretically calculated.

In one embodiment, the silicone sealant composition according to the present invention comprises one or more crosslinkers selected from the group of methyltrimethoxysilane, methyltriethoxysilane, vinyltrimethoxysilane, isobutyltrimethoxysilane and tetraethoxysilane, or any combinations of the foregoing. Preferably, the silicone sealant composition comprises vinyltrimethoxysilane. These crosslinkers are preferably present in a concentration of between 1 wt% and 5 wt%.

In one embodiment, the composition comprises one or more adhesion promoters in a concentration of 0.1 wt% to 10 wt%, more preferably from 0.1 wt% to 7 wt%; even more preferably from 0.1 wt% to 5 wt%, most preferably from 0.1 wt% to 3 wt%. Adhesion promoters are added to improve adhesion of the adhesive to various substrates, for obtaining durable bonds between the artificial grass and the substrate. These substances promote the interaction between the adhesive and the surface, particularly in the case of difficult-to-bond materials such as plastics, metals, or nonporous surfaces.

The concentration of adhesion promoters influences the balance between adhesion and other properties such as viscoelastic behavior, processability, and durability of the adhesive. Excessively high concentrations can disrupt the consistency and stability of the adhesive, whereas excessively low concentrations may not provide sufficient adhesion for specific applications.

The addition of these adhesion promoters is relevant for applications in outdoor environments, such as artificial grass installations, where the adhesive is exposed to diverse weather conditions. Adhesion promoters help to ensure that the adhesive remains resistant to the effects of moisture, temperature fluctuations, and other environmental factors, thereby optimizing the service life of the artificial grass and the adhesion to the substrate.

In one embodiment, the adhesion promoter is selected from the group of, but not limited to, silane compounds, amino-functional silanes, epoxysilanes, isocyanate silanes, titanates, zirconates, polyurethane adhesion promoters, aliphatic amines, polyamine compounds, organic phosphates, polyether-polyamide adhesion promoters, urethane-functionalized silanes, acrylic and methacrylic adhesion promoters, sulfide- and thiol group-containing compounds, aliphatic epoxides, benzothiazyl silane compounds. In a preferred embodiment, the adhesion promoters are amino silane-based.

In one embodiment, the composition comprises a catalyst. Catalysts are added to the adhesive formulation to accelerate the reaction rate of the chemical processes involved in the curing or hardening of the adhesive, without themselves being consumed in the process. This results in a more efficient curing process and can significantly reduce the processing time of the adhesive. In the case of an artificial grass adhesive, wherein a strong and durable adhesion is required, catalysts can be used specifically to optimize the reaction time of the polymer or resin matrix used, so that the adhesive cures more rapidly and reaches its maximum adhesion.

Catalysts can promote a wide range of chemical reactions, depending on the type of adhesive and the binder used. In artificial grass adhesives, for example, organic peroxides, salts of organic acids, or metals such as titanium and zirconium can be employed as catalysts to accelerate the polymerization or crosslinking reactions. This is of particular importance in applications that must become operational rapidly, such as in the installation of artificial grass on substrates that are regularly in use and where prolonged loading is expected.

The use of a catalyst makes it possible to more precisely tailor the properties of the adhesive, such as curing time, viscoelasticity, and durability, to the requirements of the specific application. In outdoor environments such as a Northwest European climate, where temperature fluctuations and moisture affect the performance of adhesives, catalysts can contribute to optimal curing and the maintenance of the quality of the adhesion, even under adverse conditions.

In one embodiment, the catalyst is added to the composition in a concentration of 0.01 wt% to 1 wt%, more preferably from 0.01 wt% to 0.7 wt%, even more preferably from 0.01 wt% to 0.5 wt%, most preferably from 0.01 wt% to 0.3 wt%. Furthermore, the catalyst may be selected from the group of, but not limited to, organic peroxides, benzoyl peroxide, cumene peroxide, tert-butyl hydroperoxide, dicumyl peroxide, methyl ethyl ketone peroxide, azodicarbonamide, salts of organic acids, zirconium compounds, titanium compounds, nickel salts, tin compounds, aluminum trifluoride, cobalt compounds, iron salts, organic amines, dimethylethanolamine, triethylamine, ethylenediamine, dibutyltin dilaurate, dibutyltin di(2-ethylhexanoate), dibutyltin dioctyl maleate, zinc and manganese compounds, organic thiols, thiourea compounds, polyurethane catalysts, isocyanates, phosphate compounds, urea compounds. In a preferred embodiment, the composition comprises dioctyltin oxide.

In one embodiment, the composition exhibits a Shore A hardness of 5 to 70, more preferably of 10 to 50. Shore A hardness is a measure of the flexibility or stiffness of a material and is measured using a durometer that measures the resistance offered by a pin to penetration into the material. A Shore A hardness between 10 and 50 indicates a material that is relatively soft to moderately firm, which is suitable for applications requiring a balance between flexibility and strength, such as in artificial grass adhesives.

A lower Shore A hardness, closer to 10, means that the material is more flexible and pliable, which can be useful when the adhesive is, for example, exposed to movement or expansion and contraction of the artificial grass and the substrate. On the other hand, a higher Shore A hardness, closer to 50, provides a firmer adhesive that is more resistant to mechanical loading and wear, which is of importance in environments with intensive use and where a greater strength of the adhesion is required. Achieving the desired Shore A hardness depends on the composition of the adhesive, including the polymers, fillers, plasticizers, and catalysts used.

Adjusting the Shore A hardness is a strategic means of tailoring the performance of the artificial grass adhesive to specific requirements such as flexibility, resistance to wear, and the durability of the bond. This is of particular importance in outdoor environments, such as in a Northwest European climate, where temperature fluctuations and exposure to moisture affect the properties of the adhesive. By optimizing the Shore A hardness, the adhesive can better cope with varying weather conditions and the prolonged loading that artificial grass installations typically undergo.

In one embodiment, the composition exhibits a tensile strength of 0.5 N/mm² to 5 N/mm², more preferably of 1 N/mm² to 3 N/mm², most preferably of 1 N/mm² to 2 N/mm², measured according to ISO 8339 at 100% deformation. Tensile strength is a measure of the maximum force that a material can withstand before it breaks or tears. The tensile strength of 1 to 2 N/mm² indicates how well the adhesive is resistant to load and stress without loss of structural integrity. This is a crucial property for artificial grass adhesive, since the adhesive must function both under dynamic loading and static forces, such as those occurring due to foot traffic, temperature fluctuations, and humidity.

ISO 8339 is the standard used to measure the tensile strength of adhesives under specific conditions, including testing the adhesive at 100% deformation, which means that the adhesive is fully stretched until the material reaches the maximum stress. The tensile strength in this embodiment suggests that the artificial grass adhesive provides sufficient force to hold the artificial grass mat firmly in place, even under heavy loading. At the same time, the lower tensile strength compared to some stronger industrial adhesives provides the necessary flexibility, which is important in applications such as artificial grass, where some movement or elongation is required without the adhesive breaking or losing its bond.

The tensile strength of the adhesive is influenced by the composition, such as the polymers, fillers, and any crosslinkers or other additives used that improve the structural integrity of the adhesive. This strength is also important for the durability of the adhesive in outdoor environments, such as the Northwest European climate, where the adhesive is exposed to fluctuating temperatures and humidity, and wherein a good bond must be guaranteed over an extended period of time. A tensile strength between 1 and 2 N/mm² offers a suitable balance between adhesion and the necessary flexibility for artificial grass installations, so that the adhesive is resistant to daily loading without premature damage or failure of the bond.

In a further embodiment, the composition exhibits a curing speed of 1 mm to 5 mm after 24 hours at 23°C and 50% relative humidity. The curing speed of an adhesive is a property that indicates how quickly the adhesive fully cures after application. This speed affects the workability and the rate at which the bonded surfaces can be effectively loaded or put into use. In this case, with a curing speed of between 1 mm and 5 mm after 24 hours, the adhesive is able to cure sufficiently to ensure the bond, while at the same time providing sufficient time for adjustment and positioning of the artificial grass during application.

The curing speed is strongly dependent on environmental factors such as temperature and humidity. At a temperature of 23°C and a relative humidity of 50%, the adhesive is optimized for use in temperature fluctuations that are typical of a temperate climate, such as in Northwest Europe. Relative humidity plays a crucial role in the curing reaction, especially when the adhesive makes use of moisture to promote the crosslinking or polymerization of the chemical compounds used. An ideal curing speed means that the adhesive cures quickly enough to effectively fix the artificial grass mat in place, whilst sufficient time remains to make corrections or adjust the artificial grass before it fully cures.

In a second aspect, the present invention relates to a use of the composition as described above. The composition comprises, inter alia, a prepolymer, stabilizers, fillers such as chalk for improved water resistance, plasticizers that promote flexibility and processability, adhesion promoters to ensure strong adhesion to diverse substrates, and catalysts to optimize the curing speed. Furthermore, the composition exhibits specific physicochemical properties, including a Shore A hardness of 10 to 50, a tensile strength of 1 N/mm² to 2 N/mm², and a curing speed of 1 mm to 5 mm after 24 hours under standard conditions.

This composition has been specifically developed for application in an outdoor environment and is suitable for use in a Northwest European climate. The combination of carefully selected components renders the adhesive weather-resistant and durable, whilst the adhesion is maintained over a prolonged period, even under challenging conditions such as fluctuating temperatures and humidity. The use of this composition is ideal for bonding artificial grass to diverse substrates, wherein both flexibility and firmness of the adhesion are necessary.

In one embodiment, the composition is used for bonding artificial grass to a substrate and/or for repairing artificial grass seams. When bonding artificial grass to a substrate, a strong, durable adhesion is essential to ensure that the artificial grass remains stable in place, even under heavy loading such as foot traffic, sports activities, or weather influences. The composition offers adhesion properties that are suitable for various types of substrates, such as concrete, asphalt, or geotextile, and remains effective under fluctuating climatic conditions, including humidity and temperature fluctuations. Thanks to the flexibility of the adhesive, it is able to accommodate the natural movement of the substrate and the artificial grass without the adhesion failing.

When bonding artificial grass to a substrate, the application focuses on creating a strong, permanent adhesion between the artificial grass and the underlying layer. This use requires a composition that is resistant to prolonged loading by foot traffic, weather influences such as rain and temperature fluctuations, and the natural movements of the substrate. Furthermore, the adhesion must remain consistent over a large surface area, without failing, in order to guarantee the stability of the artificial grass. Here, the water resistance and durability of the adhesive play an important role, as does the flexibility to accommodate movements or expansion.

In addition, the composition is suitable for repairing artificial grass seams. Seams often constitute a weak point in artificial grass installations and may come loose under loading or through wear, which affects both the aesthetics and the functionality of the artificial grass. By virtue of the high tensile strength and optimal curing speed of the composition, it is possible to repair damaged seams quickly and effectively, so that the artificial grass regains its original strength and appearance. The ease of use and flexibility of the composition render it suitable for both small repairs and large-scale applications, wherein the adhesive adapts to the unique requirements of the situation in question. Thereby, the composition contributes to a longer service life and improved performance of artificial grass installations.

When repairing artificial grass seams, the application is more local and aimed at restoring damaged or detached seams between strips of artificial grass. This use places different requirements on the composition. The adhesive must provide a rapid and reliable bond that is resistant to mechanical stress on the seams, such as that caused by stretching, shrinkage, or intensive loading. A faster curing speed may be important in this context, as repairs often need to be carried out quickly without prolonged downtime of the artificial grass surface. Furthermore, the composition must be sufficiently flexible to accommodate movement in the seams without tearing, while aesthetically blending seamlessly with the existing artificial grass.

In one embodiment, the composition may be employed for a variety of applications, including the installation of sports fields, gardens, horticultural applications, and interior cladding. In the case of sports fields, where the artificial grass is subjected to intensive loading by foot traffic and sporting activities, the composition must provide a strong, durable bond that is resistant to mechanical stress and wear. The weather resistance of the composition is essential in this context, as sports fields are frequently located in the open air and are exposed to rain, sunlight, and temperature fluctuations.

For gardens and horticultural applications, which are generally subjected to less intensive loading, aesthetics plays an important role alongside durability. The composition must ensure that the artificial grass is attached neatly and tautly, without visible seams or detached edges. At the same time, the bond must be sufficiently flexible to accommodate natural movements of the substrate, such as slight shifts caused by moisture or plant growth.

In applications for interior cladding, such as artificial grass in decorative settings or functional indoor spaces, other properties are of importance. Here, the composition must not only provide a firm bond, but must also comply with additional requirements such as low emissions of volatile organic compounds (VOCs) in order to safeguard indoor air quality. In addition, the ease of application and removal may play a role, as interior applications frequently require greater flexibility in installation and reuse.

The versatility of the composition makes it possible to guarantee optimal adhesion and functionality in all of these applications, combining the specific properties of the artificial grass and the substrate with the requirements of the environment.

In a third aspect, the present invention relates to a kit comprising a composition as described above and at least one element selected from the group of a notched trowel, masking tape, a seam tape, a marking tool, and one or more artificial grass mats. This kit provides an all-in-one solution for the professional and efficient installation or repair of artificial grass in a variety of applications, such as sports fields, gardens, horticultural applications, and interior cladding. By combining the high-quality adhesive composition with additional tools, the installation process is simplified, while the quality and durability of the bond are ensured.

The composition forms the core of the kit and provides the necessary adhesion properties, water resistance, and flexibility, suitable for both dry and slightly moist substrates. The supplementary elements in the kit each play a specific role in the installation process. The notched trowel ensures an even distribution of the adhesive over the substrate, which is essential for consistent adhesion. Masking tape can be used to demarcate areas and prevent adhesive overflow, which is particularly important in precision work or decorative applications. A seam tape reinforces the connection between different strips of artificial grass and increases the strength of the seams, whereby the installation is resistant to intensive use and mechanical stress.

The marking tool is useful when laying sports fields or other functional surfaces, where precise markings are essential. This tool makes it easy to apply lines or patterns, which contributes to a professional and aesthetically attractive finish. The kit may also comprise one or more artificial grass mats, so that a complete installation is possible without the need for separate purchases.

Optionally, the kit can be supplemented with other elements, such as gloves for safe working, a spatula for applying the adhesive in hard-to-reach corners, a finishing roller to press the artificial grass firmly down, or a cleaning agent to remove excess adhesive. These supplementary components make the kit particularly suitable for both professional installers and do-it-yourselfers, with the emphasis on ease of use, reliability, and a high-quality end result. The versatility of the kit makes it possible to install artificial grass efficiently and durably on diverse surfaces and in varying situations.

In what follows, the invention is described by means of non-limiting examples that illustrate the invention, and which are not intended or may be interpreted to limit the scope of the invention.

### EXAMPLES

### EXAMPLE 1:

An artificial grass adhesive was produced as follows with a composition as in table 1.

**Table 1. Composition of the artificial grass adhesive**

| **Ingredient** | **Quantity** |
|---|---|
| aliphatic silane-terminated polyurethane | 16.2 wt% |
| Plasticizer (diisodecyl phthalate) | 18.45 wt% |
| Crosslinker (vinyltrimethoxysilane) | 3.94 wt% |
| Chalk filler (green, black, yellow powder) | 60.92 wt% |
| Adhesion promoter (aminosilane-based) | 0.74 wt% |
| Catalyst (dioctyltin oxide) | 0.003 wt% |
| Stabilizer (triazine) | 1.77 wt% |

The artificial grass adhesive was tested on the parameters as set out in Table 2.

**Table 2. Mechanical parameters composition 1**

| **Parameter** | **Result** |
|---|---|
| Shore A hardness [ISO 868] | 40 |
| Tensile strength [ISO 37] | 1.4 N/mm² |
| Curing speed at 23°C and 50% RH | 2-3 mm, after 24h |
| Peel strength after aging [EN 13744] | 100 N/100 mm |

The artificial grass adhesive from Table 1 was compared with artificial grass adhesives having a different composition in order to evaluate the performance of the present invention. These compositions are included in Table 3.

**Table 3. Alternative compositions**

| **Ingredient** | **Composition 2 (wt%)** | **Composition 3 (wt%)** |
|---|---|---|
| aliphatic silane-terminated polyurethane | 14 | 18.5 |
| Plasticizer (diisodecyl phthalate) | 20 | 15 |
| Crosslinker (vinyltrimethoxysilane) | 3 | 5 |
| Chalk filler (green, black, yellow powder) | 62 | 58 |
| Adhesion promoter (aminosilane-based) | 0.5 | 1 |
| Catalyst (dioctyltin oxide) | 0,003 | 0,003 |
| Stabilizer (triazine) | 0.5 | 2.5 |

A composition was also prepared with other ingredients, according to Table 4.

**Table 4. Alternative composition**

| **Ingredient** | **Composition 4 (wt%)** |
|---|---|
| Silane-modified polymer (MS polymer) | 18 |
| Plasticizer (trioctyl trimellitate) | 17.5 |
| Crosslinker (methacrylsilane) | 4 |
| Filler (calcium sulfate) | 58.2 |
| Adhesion promoter (glycidyloxypropylsilane) | 1.2 |
| Catalyst (dibutyltin dilaurate) | 0.1 |
| UV stabilizer (HALS) | 1 |

Compositions 1 (present invention), 2, 3 and 4 (alternative compositions) were evaluated under identical test conditions for mechanical and aging parameters. The results are shown in Table 5.

**Table 5. Comparison of performance of artificial grass adhesives**

| **Parameter** | **1** | **2** | **3** | **4** |
|---|---|---|---|---|
| Shore A hardness [ISO 868] | 40 | 35 | 42 | 38 |
| Tensile strength [ISO 37] | 1.4 N/mm² | 1.0 N/mm² | 1.2 N/mm² | 1.1 N/mm² |
| Curing speed at 23°C and 50% RH | 2-3 mm after 24h | 1 mm after 24h | 3 mm after 24h | 3 mm after 24h |
| Peel strength after aging [EN 13744] | 100 N/100 mm | 70 N/100 mm | 90 N/100 mm | 85 N/100 mm |

The test results show that the composition in table 1 offers superior properties compared to composition 2 and 3. Thus, the higher amount of aliphatic silane-terminated polyurethane in combination with the balanced distribution of plasticizer and crosslinker provides an optimal balance between elasticity and rigidity, which translates into the higher tensile strength and peel strength after aging.

With composition 2, it was noted that the lower concentration of polyurethane and crosslinker resulted in a decrease in hardness and tensile strength, while the adhesion was less consistent upon prolonged exposure to moisture and temperature fluctuations. Composition B, on the other hand, achieved better Shore A hardness and curing speed, but struggled with a reduced tensile strength and lower peel strength after aging, presumably as a result of an imbalanced distribution of the plasticizer and stabilizer.

The results emphasize that the composition of the artificial grass adhesive in table 1 not only offers robust mechanical performance, but also an improved resistance to aging factors, which contributes to a longer service life of artificial grass installations.

The composition with silane-modified polymer in combination with calcium sulfate powder (composition 4) shows an acceptable balance of performance, but remains inferior to the composition in table 1. Composition 4 resulted in a slower curing speed and lower tensile strength, due to the choice of a less reactive plasticizer and lower concentration of crosslinker.

The artificial grass adhesive in Table 1, based on aliphatic silane-terminated polyurethane with chalk as the filler, demonstrated a clearly superior combination of curing speed, tensile strength, and resistance to aging. This makes it suitable for demanding applications in diverse climatic conditions.

## Claims

1. An adhesive composition for use in bonding artificial grass to a substrate, wherein the composition is obtained by mixing:
one or more aliphatic prepolymers in a concentration of 10-30 wt%,
wherein the aliphatic prepolymers comprise a silane group;
one or more stabilizers in a concentration of 0.1-2 wt%;
one or more chalk fillers in a concentration of 50-70 wt%;
one or more plasticizers in a concentration of 10-40 wt%, wherein the plasticizers comprise at least one phthalate;
**characterized in that** the composition is a one-component adhesive, wherein the one or more aliphatic prepolymers and the one or more stabilizers comprise a ratio between 30:1 and 40:1, and wherein the one or more aliphatic prepolymers and the one or more chalk fillers comprise a ratio between 1:3 and 1:4.

2. The composition according to any one of the preceding claims, **characterized in that** the aliphatic prepolymers have a viscosity between 10,000 and 100,000 mPa·s, measured according to ISO 3219.

3. The composition according to any one of the preceding claims, **characterized in that** the aliphatic prepolymers comprise at least one aliphatic silane-terminated polyurethane.

4. The composition according to any one of the preceding claims, **characterized in that** the composition comprises one or more stabilizers selected from the group of vinyl acetate, ethylene and/or triazines.

5. The composition according to any one of the preceding claims, **characterized in that** the chalk fillers comprise a mixture of at least green powder, black powder, yellow powder, and coated calcium carbonate, wherein the chalk fillers comprise chromium oxide and/or iron oxide.

6. The composition according to any one of the preceding claims, **characterized in that** the plasticizers comprise one or more organic plasticizers.

7. The composition according to any one of the preceding claims, **characterized in that** the organic plasticizers are selected from the group of diisodecyl phthalate (DIDP), diisononyl phthalate (DINP), di(2-ethylhexyl)phthalate (DEHP), butylbenzyl phthalate (BBP), di-n-octyl phthalate (DnOP), diisoheptyl phthalate (DIHP), preferably, diisodecyl phthalate.

8. The composition according to any one of the preceding claims, **characterized in that** the composition comprises one or more crosslinkers in a concentration of 1-5 wt%, wherein the crosslinkers are alkoxysilanes, wherein said alkoxysilanes have a molecular weight of between 100 g/mol and 250 g/mol, based on a theoretical calculation.

9. The composition according to any one of the preceding claims, **characterized in that** the alkoxy crosslinkers are selected from the group of methyltrimethoxysilane, methyltriethoxysilane, vinyltrimethoxysilane, isobutyltrimethoxysilane, and tetraethoxysilane, preferably, vinyltrimethoxysilane.

10. The composition according to any one of the preceding claims, **characterized in that** the composition comprises one or more adhesion promoters in a concentration of 0.1-3 wt%, and wherein the adhesion promoters are amino silane based.

11. The composition according to any one of the preceding claims, **characterized in that** the composition comprises a catalyst in a concentration of 0.01-0.3 wt%, wherein the catalyst comprises a base of dioctyltin oxide.

12. The composition according to any one of the preceding claims, **characterized in that** the composition exhibits a Shore A hardness of 10-50 measured according to ISO 868.

13. The composition according to any one of the preceding claims, **characterized in that** the composition exhibits a tensile strength of 1-2 N/mm², measured according to ISO 37 at 100% elongation.

14. The composition according to any one of the preceding claims, **characterized in that** the composition exhibits a curing speed of 1-5 mm after 24h at 23°C and 50% relative humidity.

15. Use of the composition according to any one of claims 1 to 13 for bonding artificial grass to a substrate.

16. Use of the composition according to any one of claims 1 to 13 for repairing artificial grass seams.

17. Use of the composition according to claim 14 for the installation of sports fields, gardens, horticultural applications and/or interior cladding.

18. Kit comprising a composition according to any one of claims 1 to 16 and at least one element selected from the group of a notched trowel, masking tape, a seam tape, a marking tool and one or more artificial grass mats.
